# EUROPEAN PATENT APPLICATION

(11) **EP 4 764 904 A1**
(43) Date of publication of application: **24.06.2026**
(21) Application number: 24221484.9
(22) Date of filing: 19.12.2024
(51) Int. Cl.: G06F 18/214, B60W 40/09

(54) **A COMPUTER-IMPLEMENTED METHOD FOR TRAINING OF A MACHINE-LEARNNG MODEL IN VEHICLE DRIVER BEHAVIOR ASSESSMENT FOR A TWO-WHEELED OR A THREE-WHEELED VEHICLE**

(71) Applicant: Autoliv Development AB, 447 37 Vårgårda (SE)
(72) Inventor: Ahmed, Jawwad, 447 37 Vårgårda (SE); Alkhoury, Ziad, 95800 Paris (FR)
(74) Representative: Westpatent AB

(57) **Abstract**

The present disclosure relates to a computer-implemented method for training of a machine-learning model in vehicle driver behavior assessment for a two-wheeled or a three-wheeled vehicle (1). The method comprises preparing (S100) training data, where preparing (S100) training data comprises obtaining and automatically collecting (S110) a plurality of sets of sensor data using at least two different sensors (2, 3, 4, 5) at different sensor positions including at least one sensor position at a vehicle driver (8), each set of sensor data being collected during a corresponding time period, the method further comprises training (S200) the machine-learning model using the prepared training data, which in turn comprises associating (S210) each set of sensor data with a certain predetermined vehicle driver behavior by comparing sensor data from the sensors (2, 3, 4, 5), and determining relative motions.

## Description

### DESCRIPTION OF THE DISCLOSURE

The present disclosure relates to an improved computer-implemented method for training of a machine-learning model in vehicle driver behavior assessment for a two-wheeled or a three-wheeled vehicle

It is well-known that motorcycle (MC) accidents can result in severe injuries or can turn fatal, where part of the reason is the more exposed nature of the rider, or driver, of the MC as compared to the driver in a car, while the MC travels in the same speed intervals. Also, there is no restraint on the MC such as a seat belt as in a car. There are also other motion dynamics which make the MC rider, or MC driver, far more vulnerable in case of accident or a crash.

Many of the accidents related to MCs are due to an MC driver's behavior, including at least one of movement, position and posture, and an unsafe behavior should be discouraged.

Accident situations of the above type occur also for other types of two- or three-wheeled vehicles such as bicycles, scooters and the like, MCs only being mentioned as an example.

In the light of this it is desired to provide an enhanced identification of unsafe behavior for a driver of a two- or three-wheeled vehicle, which can cause lose control of the vehicle which might end up in an accident that can turn fatal or result in serious injuries.

It is therefore desired to provide training data and models for data-driven machine-learning algorithms, i.e. for data-driven machine-learning computer programs, that can provide such enhanced vehicle driver behavior assessment.

This is achieved by means of a computer-implemented method for training of a machine-learning model in vehicle driver behavior assessment for a two-wheeled or a three-wheeled vehicle that is adapted to travel in a forward movement direction. The method comprises preparing training data, which in turn comprises obtaining and automatically collecting a plurality of sets of sensor data using at least two different sensors at different sensor positions, including at least one sensor position at a vehicle driver. Each set of sensor data is collected during a corresponding time period. The method further comprises training the machine-learning model using the prepared training data, where training the machine-learning model comprises associating each set of sensor data with a certain predetermined vehicle driver behavior, including at least one of position, posture and movement, by comparing sensor data from the sensors and determining relative motions.

This enables detection of vehicle driver behavior on the vehicle using relative motion of a multi-sensor system. By comparing sensor data from the sensors, the accuracy of the sensor data is increased, while relatively inexpensive sensors can be used.

According to some aspects, the sensor positions include at least one of at a driver head/helmet region, at a driver chest/back region, and at the vehicle. This ensures that sufficient sensor data can be collected.

According to some aspects, obtaining and automatically collecting sets of sensor data comprises generating sensor data during doings of individual subjects, said doings comprising movements of a vehicle driver, and generating sensor data comprising movements of the vehicle.

According to some aspects, the movements of a vehicle driver comprises at least one of head rotation angle and/or head rotation frequency, upper-body side inclination angle relative the vehicle, and standing/sitting duration and/or standing/sitting change frequency.

In this manner a vehicle driver behavior profile can be developed and used to detect changes in vehicle driver behavior, for example posture.

According to some aspects, the computer-implemented method further comprises associating each predetermined vehicle driver behavior with a certain degree of safety.

This means that different types of predetermined vehicle driver behavior can be determined to be unsafe or dangerous to different degrees.

According to some aspects, training the machine-learning model is performed by collecting sensor data using at least one of a simulated environment, a vehicle simulator that is driven by a test person, and recorded driving sessions where drivers run test vehicles along test tracks.

This means that training data, in particular sensor data 100, can be collected in many different ways, both in simulated environments and in real environments.

According to some aspects, the sensor data are collected using at least one sensor of one or more accelerometer sensors and gyroscope sensors. This means that many types of available, unexpensive and well-known sensors can be used.

This is also achieved by means of a computer-implemented method for determining a safety action for a two-wheeled or a three-wheeled vehicle. The method comprises acquiring a set of sensor data, determining a certain vehicle driver behavior, including at least one of position, posture and movement, and determining a certain degree of safety using the determined vehicle driver behavior. The method further comprises determining a corresponding safety action by comparing the determined degree of safety with at least one threshold value, and implementing the determined safety action.

This means that unsafe driver behavior can be characterized in different degrees, while a lowered computation load is enabled, since the computer-implemented method is easily implementable on embedded devices with low power consumption. Furthermore, a certain degree of safety can be determined using the collected sensor data to determine vehicle driver behavior. Depending on the current degree of safety, a suitable safety action can be determined, including performing no safety action.

According to some aspects, the computer-implemented method further comprises determining the certain vehicle driver behavior and/or determining a certain degree of safety by implementing the trained machine-learning model being trained in accordance with the computer-implemented method as described herein, and/or being trained in accordance with a computer-implemented method as described herein.

This means that the trained machine-learning model can be applied and used for determining a certain vehicle driver behavior, and determining a certain degree of safety using the determined vehicle driver behavior, as well as for determining a corresponding safety action.

This also means that the parameters can be dynamic and need not be adjusted manually, where manual adjustment requires knowledge and experimentation.

According to some aspects, the safety action is implemented in the form of either no safety action or at least one of
- issuing a visual warning to the vehicle driver,
- issuing a tactile warning to the vehicle driver,
- issuing a message to the vehicle driver,
- issuing a message to an external device;
- adapting a threshold for triggering at least one active safety measure, and
- triggering at least one active safety measure.

In this manner, each safety action can be matched to a certain type of driver behavior. This enables a proper safety action to be launched,

According to some aspects, an active safety measure comprises an automatic reduction of speed and/or inflation of at least one safety airbag.

In this manner, an active safety measure can take place in case it is determined that a crash is imminent. The active safety measure may be initiated a certain time after a corresponding warning level has been determined.

The present disclosure also relates to computer programs, control units and systems that are associated with the above advantages.

Accordingly, it is here appreciated that the computer-implemented methods, the computer programs and the computer readable mediums, all as described herein, and in accordance with the present disclosure, may be realized in hardware, such as, the control unit arrangements and the devices, all as described herein, as well as, in the systems, as described herein. The hardware such as the control unit arrangements all as described herein, as well as, the systems, as described herein, are then arranged to perform the computer-implemented methods, and the computer programs, whereby the same advantages and effects are obtained as discussed for the computer-implemented methods herein.

### BRIEF DESCRIPTION OF DRAWINGS

The present disclosure will now be described more in detail with reference to the appended drawings, where:
- Figure 1: schematically illustrates a user who rides a motor bike and sensors;
- Figure 2: schematically illustrates a control unit;
- Figure 3: shows an example computer program product; and
- Figure 4-5: show flowcharts for methods according to the present disclosure.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

Modern data driven approaches based on ML (Machine-Learning) and DL (Deep Learning) provide more flexibility to automatically learn from the provided crash data, driving data from various roads and other stress tests. Also, these methods can adopt to the newer crash scenarios, vehicles, and variable as more and more data is available. Essentially, they can be retrained and learn new crash scenarios when provided with newer data.

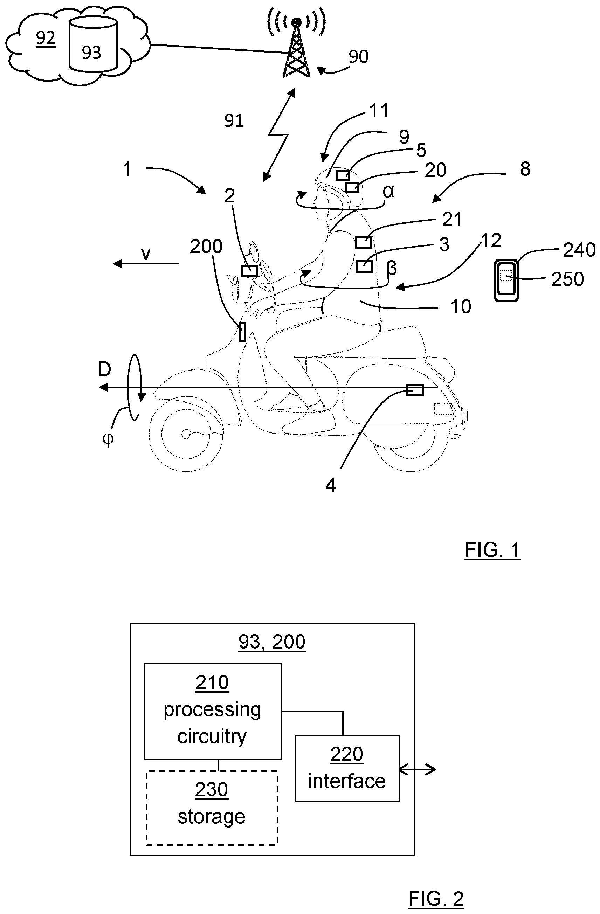

With reference to Figure 1, there is a subject 8 in the form of a rider 8 riding a vehicle in the form of a motorcycle (MC) 1, in the example the rider 8 is wearing a helmet 9 and a vest 10. In the following the MC rider will be referred to as an MC driver 8 or, more general, as a vehicle driver 8. It shall be appreciated that in this contest, a driver can also be regarded as a rider. According to some aspects, the MC 1 comprises a control unit 200 that is adapted to completely or partly process the methods as described herein. The methods as described herein may also, completely or partly, be processed at a remote server 93 and/or an external device processor 250, such as a mobile phone processor 250 comprised in a mobile phone 240, or a processor 250 comprised in any other type of external device 240.

It is to be noted that although MCs are used for illustrating the present disclosure, the present disclosure generally relates to any type of two- or three-wheeled vehicle, not only MCs. For example, so-called eScooters, electrically powered scooters, have skyrocketed in recent accident statistics, and therefore constitute an important group of vehicles in view of the present disclosure.

MCs with integrated airbag arrangements constitute an emerging technology which reduces the risk of severe injury or fatality in case of an MC accident. Furthermore, helmets 9, handles and dashboards can be equipped with one or more devices that can issue one or more types of warnings, both visual and audio warnings as well as haptic warnings such as vibrations.

There are numerous proposals regarding how to develop real time and non-real time crash or accident detection systems based on motion sensors to detect these crash or accident events. Sensors and associated apparatus can be integrated on the vehicle itself or on the vehicle driver 8, such as a fabric or a wearable such as the helmet 9 and the vest 10.

According to some aspects, at least one of the helmet 9 and the vest 10 comprises one or more airbags 20, 21 which are adapted to provide protection to the MC driver 8 that wears at least one of the vest 10 and the helmet 9 when the MC driver 8 is thrown away from the MC 1 after a crash. Such a helmet 9 may also be equipped with one or more devices that can issue one or more types of warnings. Other protective pieces of garment are conceivable, such as for example belts. One or more airbags 22 may also be integrated with the MC 1.

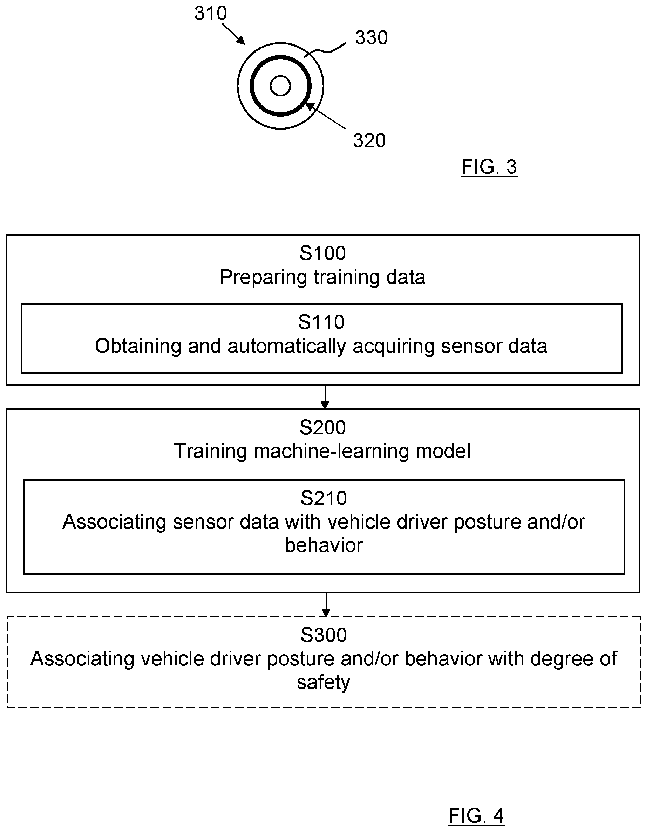

With reference to Figure 1 and Figure 4, the present disclosure relates to a computer-implemented method for training of a machine-learning model in in vehicle driver behavior assessment for a two-wheeled or a three-wheeled vehicle 1 that is adapted to travel in a forward movement direction D. The method comprises preparing S100 training data, which in turn comprises obtaining and automatically collecting S110 a plurality of sets of sensor data using at least two different sensors 2, 3, 4, 5 at different sensor positions including at least one sensor position at a vehicle driver 8. According to some aspects, at least one sensor 4 may be positioned on the vehicle 1, in this example on the MC 1. According to some aspects, there are at least two different sensor positions.

Each set of sensor data is normally collected during a corresponding time period.

The method further comprises training S200 the machine-learning model using the prepared training data, where training S200 the machine-learning model comprises associating S210 each set of sensor data with a certain predetermined vehicle driver behavior, including at least one of position, posture and movement, by comparing sensor data from the sensors 2, 3, 4, 5 and determining relative motions.

According to some aspects, the sensor data comprises motion data α, β, φ that can be used for determining vehicle driver behavior. For example, as illustrated in Figure 1, the motion data comprises head rotation angle α, upper body rotation angle β and MC inclination or roll angle φ. Other examples follow.

This enables detection of vehicle driver behavior on the vehicle 1 using relative motions of a multi-sensor system. By comparing sensor data from the sensors 2, 3, 4, 5, the accuracy of the sensor data is increased, while relatively inexpensive sensors can be used. Generally, camera devices are not required, and the present disclosure thus enables a low cost solution compared to camera/radar/Lidar based systems. However, the present disclosure does not explicitly exclude the presence of one or more camera devices, although the present disclosure enables camera devices to be omitted.

According to some aspects, the sensor positions include at least one of at a driver head/helmet region 11, at a driver chest/back region 12, or upper body region, and at the vehicle 1.

This ensures that sufficient sensor data can be collected.

Sensors at the helmet region 11 may include smart glasses with sensors and communication means, wired or wireless, and processing means. Sensors at the chest or back area may be comprised in the vest 10 or a wearable device with integrated sensors and communication means, wired or wireless, and processing means. Sensors at the vehicle may in this example be mounted to an MC chassis and may form an integrated system or an add-on device with sensors and communication means and processing means. Sensors, sensor device and sensor arrangements may thus be implemented and positioned in many different ways.

According to some aspects, obtaining and automatically collecting S110 sets of sensor data comprises generating sensor data during doings of individual subjects 8, said doings comprising movements of a vehicle driver 8, and generating sensor data comprising movements of the vehicle 1.

According to some aspects, the movements of a vehicle driver 8 comprises at least one of head rotation angle α and/or head rotation frequency, upper-body side inclination angle β relative the vehicle 1, and standing/sitting duration and/or standing/sitting change frequency.

In this manner a vehicle driver behavior profile can be developed and used to detect changes in vehicle driver behavior, for example posture.

Head rotation angle α and/or head rotation frequency can be determined using the sensors at the helmet region 11 and the sensors at the chest or back region 12. By means of these sensors it is possible to extract information about the head rotation relative to the upper body and the duration and frequency of the rotation.

Such information includes frequent rotation or rotation for a long period which may characterize an unsafe behavior.

Upper body side inclination angle β can be detected by comparing the relative movement of the driver's upper body relative to the MC 1. This requires sensors at the chest or back area and at the vehicle, here the MC 1. For example, a certain difference threshold in lateral acceleration for a certain time period means that the driver's upper body is in an unsafe position for an unsafe time duration. This can be determined by using angular rotation of the upper body compared to the angular rotation of the vehicle. Frequent side inclination could be considered as unsafe behavior.

It should be noted that, according to some aspects, for the movements of the vehicle driver 8, the movements of the helmet region 11, the upper body region 12 and the vehicle 1 itself, these movements can be tracked, by means of sensors, not only for the angles α, β, φ disclosed above, but for all possible translations and rotations including pitch, yaw and roll. For this purpose, each one of the helmet region 11, the upper body region 12 and the vehicle 1 are associated with a corresponding coordinate system.

This means that the sensor data can be used for determining motion data for movements of the vehicle driver 8 that also may comprise at least one of the movements above.

Furthermore, the motion data may include at least one of angular and linear distance, velocity and acceleration.

Regarding standing/sitting duration and/or standing/sitting change frequency, to detect if the driver 8 is standing, sensor data from the upper body region 12 and/or the helmet region 11 are compared with sensor data from the MC 1. For example, detecting vertical accelerations from the driver's upper body with no vertical accelerations from the MC 1 means that the driver 8 is moving upwards. Analysis of duration/amplitude/frequency for these sensor data can be used to determine the driver's vertical behavior such as standing, standing frequently, etc.

According to some aspects, the computer-implemented method further comprises associating S300 each predetermined vehicle driver behavior with a certain degree of safety.

This means that different types of predetermined vehicle driver behavior can be determined to be unsafe or dangerous to different degrees.

According to some aspects, training S200 the machine-learning model is performed by collecting sensor data using at least one of a simulated environment, a vehicle simulator that is driven by a test person; and recorded driving sessions where vehicle drivers run test vehicles along test tracks.

This means that training data, in particular sensor data 100, can be collected in many different ways, both in simulated environments and in real environments. In particular, when a trained machine-learning model is run in a real user situation, more training data is collected continuously and preferably put together centrally for all MCs that run and are equipped with the required data collection system.

According to some aspects, the sensor data are collected using at least one sensor among accelerometer sensors 2, 3, and gyroscope sensors 4, 5. This means that many types of available, unexpensive and well-known sensors can be used. According to some aspects, mainly sensors of the type 6-axis inertial measurement unit, 3d accelerometer and 3d gyroscope are used. Alternatively, or as a complement, 2D sensors can be used.

One or more camera sensor arrangements can also be used, although the present invention can be exercised without the need for a camera sensor arrangement.

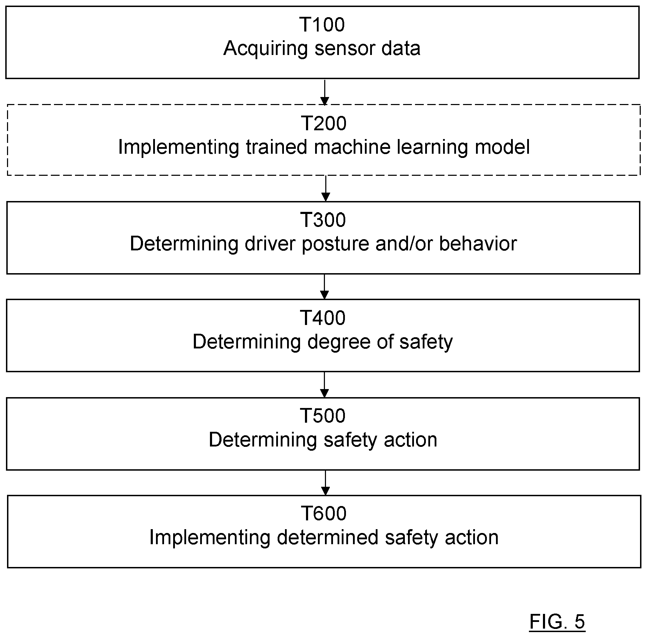

With reference to Figure 1 and Figure 5, the present disclosure relates to a computer-implemented method for determining a safety action for a two-wheeled or a three-wheeled vehicle 1. The method comprises acquiring T100 a set of sensor data, determining T300 a certain vehicle driver behavior, including at least one of position, posture and movement, and determining T400 a certain degree of safety using the determined vehicle driver behavior.

The method further comprises determining T500 a corresponding safety action by comparing the determined degree of safety with at least one threshold value, and implementing T600 the determined safety action.

By means of the present disclosure, unsafe driver behavior can be characterized in different degrees, while a lowered computation load is enabled, since the computer-implemented method is easily implementable on embedded devices with low power consumption.

In this way, a certain degree of safety can be determined using the collected sensor data to determine vehicle driver behavior. Depending on the current degree of safety, a suitable safety action can be determined, including performing no safety action.

It is to be noted that the computer-implemented method for determining a safety action according to the above does not need a trained machine-learning model to run, and does not even have to be based on an ML system. All sensor data processing and calculations can be performed analytically, without the help of a trained machine-learning model.

According to some aspects, the computer-implemented method further comprises determining T300 the certain vehicle driver behavior and/or determining T400 a certain degree of safety by implementing T200 the trained machine-learning model being trained in accordance with the computer-implemented method as described herein, and/or being trained in accordance with a computer-implemented method as described herein.

This means that the trained machine-learning model can be applied and used for determining T300 a certain vehicle driver behavior and determining T400 a certain degree of safety using the determined vehicle driver behavior, as well as for determining T500 a corresponding safety action.

This also means that the parameters can be dynamic and need not be adjusted manually, where manual adjustment requires knowledge and experimentation.

According to some aspects, the safety action is implemented in the form of either no safety action or at least one of issuing a visual warning to the vehicle driver 8 such as for example a light signal, issuing a tactile warning to the vehicle driver 8 such a certain degree of vibration in the helmet 9 and/or the handles, issuing a message to the vehicle driver 8, issuing a message to an external device 93, 240, adapting a threshold for triggering at least one active safety measure, and triggering at least one active safety measure.

For example, issuing a message to an external device 93, 240 includes communicating with a mobile phone 240, for example via an App (Application) installed at the mobile phone 240. An external or remote server 93 may also be recipient of a message.

A message may include driver behavior statistics as well as suggestions to the vehicle driver 8, thus enabling a driver coaching function.

In this manner, each safety action can be matched to a certain type of driver behavior. This enables a proper safety action to be launched.

According to some aspects, an active safety measure comprises an automatic reduction of speed and/or inflation of at least one safety airbag 20, 21.

In this manner, an active safety measure can take place in case it is determined that a crash is imminent. The active safety measure may be initiated a certain time after a corresponding warning level has been determined.

The system contains at least one control unit that receives measured or processed signals (in a wired or preferable a wireless way) from all sensing units and able to process these signals. This processing unit could be inside one or more of the sensing units. It can be located in any of the 3 main locations (head area, upper body, or on the motorbike) or it can be a mobile phone with wireless connection to the 3 sensing units or a separate device.

The control unit 200 may be constituted by a control unit arrangement with one or more control unit parts that can be separate from each other. Some or all control unit parts may be comprised in a control unit arrangement 200 and/or the remote server 93 as well as an external device processor 250, such as a mobile phone processor 250 comprised in a mobile phone 240, or a processor 250 comprised in any other type of external device 240.

Figure 2 schematically illustrates, in terms of a number of functional units, the components of a control unit 93, 200, 250 according to an embodiment.

Processing circuitry 210 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 230. The processing circuitry 210 may further be provided as at least one application specific integrated circuit (ASIC), or field programmable gate array (FPGA) .

Particularly, the processing circuitry 210 is configured to cause the control unit 93, 200, 250 to perform a set of operations, or steps. These operations, or steps, were discussed above in connection to the various methods. For example, the storage medium 230 may store the set of operations, and the processing circuitry 210 may be configured to retrieve the set of operations from the storage medium 230 to cause the control unit 93, 200, 250 to perform the set of operations. The set of operations may be provided as a set of executable instructions. Thus, the processing circuitry 210 is thereby arranged to execute methods and operations as herein disclosed.

The storage medium 230 may also comprise persistent storage, which, for example, can be any single one or combination of magnetic memory, optical memory, solid state memory or even remotely mounted memory.

The control unit 93, 200, 250 may further comprise a communications interface 220 for communications with at least one other unit. As such, the communications interface 220 may comprise one or more transmitters and receivers, comprising analogue and digital components and a suitable number of ports for wired or wireless communication.

The processing circuitry 210 is adapted to control the general operation of the control unit 93, 200, 250 e.g. by sending data and control signals to the external unit and the storage medium 230, by receiving data and reports from the external unit, and by retrieving data and instructions from the storage medium 230. Other components, as well as the related functionality, of the control unit 93, 200, 250 are omitted in order not to obscure the concepts presented herein.

Figure 3 shows a computer program product 310 comprising computer executable instructions 320 arranged on a computer readable medium 330 to execute any of the methods disclosed herein.

The present disclosure also relates to a computer program 310, or computer program product 310, comprising computer readable instructions 320 for applying the computer-implemented method as described herein, and/or the preparation of training data, as described herein, and/or a computer readable medium 330 comprising said computer program 310.

The present disclosure also relates to a computer program 310, or computer program product 310, comprising computer readable instructions 320 for a machine-learning model as described herein, and/or a computer readable medium 330 comprising said computer program 310.

The present disclosure also relates to a control unit 93, 200, 250, for training of a machine-learning model, adapted to control at least, the implementing of the machine-learning model as described herein, and/or the preparation of training data as described herein.

According to some aspects, once the machine-learning model has been trained, it can at least partly be run on a remote server 93. According to some aspects, with reference to Figure 1, the computer-implemented method may be adapted to at least partly run on, and via, external units, for example a communication system 90 that provides wireless communication 91. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

In this manner training data can be collected from several users during normal running, such that the machine-learning model can be continuously updated.

It is also appreciated that some processing functions may be performed by resources in a remote network 92, such as the remote server 93.

The control unit 93, 200, 250 may be constituted by a control unit arrangement with one or more control unit parts that can be separate from each other.

The control unit 93, 200, 250 is according to some aspects adapted to implement, or trigger, a safety action.

According to some aspects, the machine-learning model is trained and run based on a neural network architecture.

The present disclosure also relates to a system for training of a machine-learning model in vehicle driver behavior assessment for a two-wheeled or a three-wheeled vehicle 1, for communication of information, for enabling implementing the machine-learning model as described herein, and for enabling the preparation of training data as described herein. The system comprises a machine-learning model, sensors 2, 3, 4, 5 acquiring sensor data, and means 93, 200 for processing data. The system utilizes the computer program 310 as described herein, and/or the computer readable medium 330 as described herein.

The system utilizes the computer program 310 as described herein, and/or the computer readable medium 330 as described herein.

The present disclosure also relates to a safety system comprising the control unit 93, 200, 250, the sensors, or sensor devices, 3, 4, 5 and means for issuing the warnings and means 20, 21 for performing at least one safety measure such as for example airbags 20, 21 and braking means.

Determining motion data α, β, cp for a vehicle driver 8 and optionally also for the vehicle 1 means that motion data α, β, φ are determined at least for the vehicle driver 8, but may optionally also be determined for the vehicle 1 although it is not necessary for performing the invention.

When mentioned that the driver behavior includes at least one of position, posture and movement, it means driver position, driver posture and driver movement.

## Claims

1. A computer-implemented method for training of a machine-learning model in vehicle driver behavior assessment for a two-wheeled or a three-wheeled vehicle (1) that is adapted to travel in a forward movement direction (D), where the method comprises
preparing (S100) training data,
where preparing (S100) training data comprises
obtaining and automatically collecting (S110) a plurality of sets of sensor data using at least two different sensors (2, 3, 4, 5) at different sensor positions including at least one sensor position at a vehicle driver (8), each set of sensor data being collected during a corresponding time period;
and
training (S200) the machine-learning model using the prepared training data;
where training (S200) the machine-learning model comprises
associating (S210) each set of sensor data with a certain predetermined vehicle driver behavior, including at least one of position, posture and movement, by comparing sensor data from the sensors (2, 3, 4, 5) and determining relative motions.

2. The computer-implemented method according to claim 1, wherein the sensor positions include at least one of at a driver head/helmet region (11);
at a driver chest/back region (12); and
at the vehicle (1).

3. The computer-implemented method according to any one of the claims 1 or 2, wherein obtaining and automatically collecting (S110) sets of sensor data comprises
generating sensor data during doings of individual subjects (8), said doings comprising movements of a vehicle driver (8), and generating sensor data comprising movements of the vehicle (1).

4. The computer-implemented method according to claim 3, wherein the movements of a vehicle driver (8) comprises at least one of
- head rotation angle (α) and/or head rotation frequency;
- upper-body side inclination angle (β) relative the vehicle (1); and
- standing/sitting duration and/or standing/sitting change frequency.

5. The computer-implemented method according to any one of the previous claims, further comprising
associating (S300) each predetermined vehicle driver behaviorwith a certain degree of safety.

6. The computer-implemented method according to any one of the previous claims, wherein training (S200) the machine-learning model is performed by collecting sensor data using at least one of
- a simulated environment;
- a vehicle simulator that is driven by a test person; and
- recorded driving sessions where drivers run test vehicles along test tracks.

7. The computer-implemented method according to any one of the previous claims, wherein the sensor data are collected using at least one sensor of one or more
- accelerometer sensors (2, 3); and
- gyroscope sensors (4, 5).

8. A computer-implemented method for determining a safety action for a two-wheeled or a three-wheeled vehicle (1), comprising
acquiring (T100) a set of sensor data;
determining (T300) a certain vehicle driver behavior, including at least one of position, posture and movement;
determining (T400) a certain degree of safety using the determined vehicle driver behavior;
determining (T500) a corresponding safety action by comparing the determined degree of safety with at least one threshold value, and
implementing (T600) the determined safety action.

9. The computer-implemented method according to claim 8, further comprising determining (T300) the certain vehicle driver behavior and/or determining (T400) a certain degree of safety by
implementing (T200) the trained machine-learning model being trained in accordance with the computer-implemented method according to any one of the claims 1-7, and/or being trained in accordance with a computer-implemented method according to any one of the claims 1-7.

10. The computer-implemented method according to any one of the claims 8 or 9, wherein the safety action is implemented in the form of either no safety action or at least one of
- issuing a visual warning to the vehicle driver (8);
- issuing a tactile warning to the vehicle driver (8);
- issuing a message to the vehicle driver (8);
- issuing a message to an external device (93, 240);
- adapting a threshold for triggering at least one active safety measure, and
- triggering at least one active safety measure.

11. The computer-implemented method according to claim 10, wherein an active safety measure comprises an automatic reduction of speed and/or inflation of at least one safety airbag (20, 21).

12. A computer program (310) comprising computer readable instructions (320) for applying the computer-implemented method according to claim 9, and/or the preparation of training data, according to any one of claims 1-7, and/or a computer readable medium (330) comprising said computer program (310).

13. A computer program (310) comprising computer readable instructions (320) for a machine-learning model according to any one of claims 1-7, and/or a computer readable medium (330) comprising said computer program (310).

14. A control unit (93, 200, 250), for training of a machine-learning model, adapted to control at least, the implementing of the machine-learning model according to claim 9, and/or the preparation of training data according to any one of claims 1-7.

15. A system for training of a machine-learning model in vehicle driver behavior assessment for a two-wheeled or a three-wheeled vehicle (1), for communication of information, for enabling implementing the machine-learning model according to any one of claims 1-7, and for enabling the preparation of training data according to any one of claims 1-7;
where the system comprises a machine-learning model, sensors (2, 3, 4, 5) acquiring sensor data, and means (93, 200) for processing data;
wherein the system utilizes the computer program (310) according to claim 12 or 13, and/or the computer readable medium (330) according to claim 12 or 13.
